# EUROPEAN PATENT APPLICATION

(11) **EP 1 300 837 A2**
(43) Date of publication of application: **09.04.2003**
(21) Application number: 02255687.2
(22) Date of filing: 15.08.2002
(51) Int. Cl.: G11B 7/005, G11B 7/0037, G11B 19/12

(54) **Disk reproducer**

(30) Priority: 02.10.2001 JP 2001306991
(71) Applicant: Pioneer Corporation, Meguro-ku, Tokyo (JP)
(72) Inventor: Yoshimura, Hideaki., Pioneer Corporation, kawagoe-shi, Saitama (JP)
(74) Representative: Haley, Stephen

(57) **Abstract**

In reproducing a DVD-RW1, a moving target position W is set to locate a read light of the pick-up (4) in an area on the inner circumferential side of disk than a second recording area (3F) adjacent to the inner circumferential side of a first recording area (3G), and the pick-up is moved to traverse the first recording area (3G) by traverse seek (S). Thereby, the read light of the pick-up (4) can be located in the second recording area (3F) reliably without getting out of track, and the data necessary for reproduction control that is recorded in the second recording area (3F) can be read to perform the reproduction operation excellently even if the disk has an area with data recorded in a format unreadable by the pickup.

## Description

The present disclosure relates to the subject matter contained in Japanese Patent Application No.2001-306991 filed on October 02, 2001, which is incorporated herein by reference in its entirely.

The present invention relates to a disk reproducer for reproducing the disk by optically reading the data recorded on the disk mounted.

In recent years, there are various media for recording the audio, video, and various kinds of character information, including the DVD (Digital Versatile Disc).

As the DVDs, the DVD-VIDEO for read-only use, DVD-ROM (Read Only Memory), DVD-R (Recordable) in which data can be recorded, and DVD-RW (Rewritable) in which data canbe rewritten many times are employed. Various types of DVDs have a great number of bits making up the digital code formed along tracks extending spirally from the central portion to the circumferential portion.

Among such DVDs, the DVD-VIDEO for recording the animation contents for the movie or drama is most popular. If the DVD-VIDEO commercially available on the market is reproduced by the DVD reproducer, one can enjoy the animation contents at home with remarkably higher image quality and sound quality than conventionally made.

A DVD-RW recorder for recording the animation contents on the rewritable DVD-RW is available on the market.

Making use of the DVD-RW recorder, the animation contents recorded by a digital movie camera can be recorded on the DVD-RW, whereby it is beneficial to produce the animation contents for the personal recording in the family travel and for the personally taken movie.

And if the DVD-RW recorded by the DVD-RW recorder can be reproduced by the DVD reproducer, the uses of DVD-VIDEO and DVD-ROM are further expanded.

Herein, in the case where the data recorded on the DVD-VIDEO or DVD-ROM is a literary work, the copyright may be infringed, if the data for that work is copied illegally, whereby the DVD-VIDEO or DVD-ROM has the recorded data scrambled to prevent the illegal copy. Since the scrambled data can not be read directly, a key code required to unscramble the data and a copy inhibit code indicating that the recorded data is inhibited from copying are written as the control data in a read-in area at which the pick-up of DVD starts the reading operation.

Thereby, in reproducing the DVD-VIDEO or DVD-ROM on the DVD reproducer, the DVD reproducer reads the key code to unscramble the data, and reproduces the data of the DVD-VIDEO or DVD-ROM.

On one hand, in the disk recorder, if the data for the literary work recorded on the DVD-VIDEO or DVD-ROM is written onto the DVD-RW, for example, the writing onto the DVD-RW is inhibited owing to the copy inhibit code.

However, if the control data including the key code and the copy inhibit code is dealt with as simple data, using a personal computer, the data for the literary work recorded on the DVD-VIDEO or DVD-ROM is copied illegally onto other optical disks such as DVD-RW.

A development for preventing such illegal copy on the side of the recording medium on which the data is written has been made.

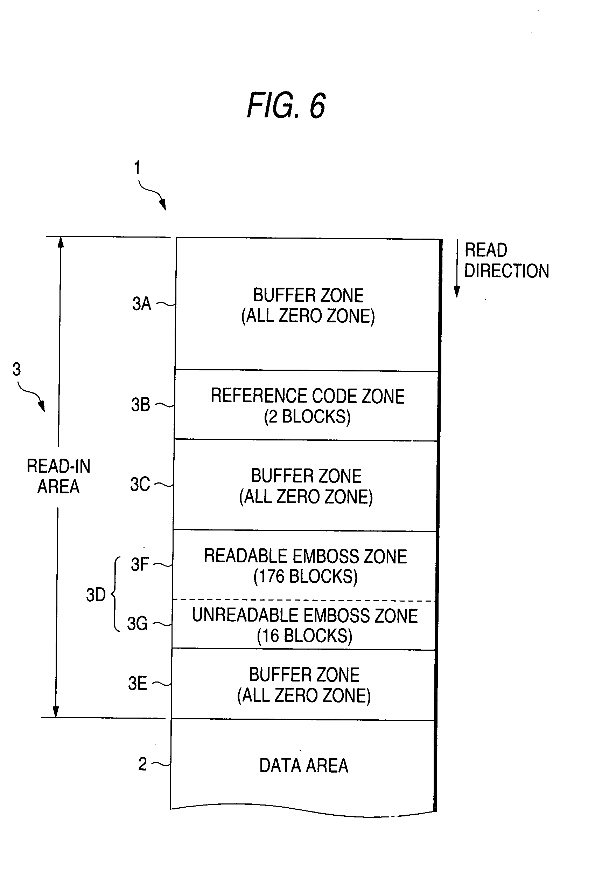

That is, Fig. 6 shows a format of DVD-RW1 in which the illegal hard copy is prevented on the side of the recording medium. The DVD-RW1 is provided with a read-in area 3 at which the pick-up starts the reading operation inside a data area 2 where various kinds of data are recorded, that is, near a start point in a reading direction from the center of the DVD-RW1 toward the outer circumference.

And the read-in area 3 comprises, from the start point in the reading direction, a buffer zone 3A where a predetermined data row composed of all "0", for example, is written, a reference code zone 3B where the codes for use in scrambling the data recorded in the data area 2 are written, another buffer zone 3C composed of data row as in the buffer zone 3A, a control data zone 3D where the control data is recorded, and another buffer zone 3E composed of data row as in the buffer zones 3A and 3B.

Herein, the read-in area 3 is provided with a readable emboss zone 3F, as will be described later, and the control data necessary for reproduction control is recorded in the readable emboss zone 3F.

The data area 2 is provided around the outer circumference of the read-in area 3, and music data and image data are recorded in this area. And the reproduction control for the data recorded in the data area 2 is made by reading the control data recorded in the readable emboss zone 3F of the read-in area 3 with the pick-up, whereby the reproduction of data is started.

Among others, the control data zone 3D has the control data written in emboss shaped by a stamper in fabricating the DVD-RW1, whereby rewriting the control data after fabrication is disabled.

Thereby, when one tries to copy the scrambled data recorded on the disk DVD-VIDEO or DVD-ROM, a key code for unscrambling that is recorded on the disk can not be written into the control data zone 3D, so that the written data can not be reproduced to prevent illegal copy effectively.

Also, the control data zone 3D comprises a readable emboss zone 3F where the control data necessary for reproduction control of data is recorded, and an unreadable emboss zone 3G where the control data necessary for recording control to record various kinds of data in the data area is recorded.

The readable emboss zone 3F has many bits of control data written successively in emboss to be readable by the pick-up of the disk reproducer.

The unreadable emboss zone 3G has a mirror face except for the Land Pre-Pit (hereinafter referred to as "LPP") indicating the address of disk, and is a recording area where the tracking control by the pick-up of the DVD reproducer is ineffective and the data can not be read by the pick-up.

The LPP recorded in the unreadable emboss zone 3G is under the phase locked loop control (hereinafter referred to as "PLL"). The address of data area that can be read by the pick-up of the DVD-RW recorder and is required to start recording the data is acquired in the DVD-RW recorder.

By the way, in reproducing the data recorded on the disk DVD-VIDEO or DVD-ROM, the DVD reproducer makes the tracking control for moving the pick-up in a radial direction of disk to enable the read light of the pick-up to follow the track of a rotating disk and driving an objective lens for the pick-up in a direction almost perpendicular to the track. Thereby, the data recorded on the disk can be read reliably by preventing the read light of the pick-up from being out of track.

In this DVD reproducer, first of all, the data necessary for reproduction control recorded in the read-in area is read before starting to reproduce the data recorded in the data area of the DVD-VIDEO or DVD-ROM disk mounted. Therefore, an operation for locating the read light of the pick-up in the recording area where the data necessary for reproduction control is recorded in the read-in area is performed.

In a state before starting the reproduction, the pick-up is on stand-by at home position which is preset such that its read light is located at a predetermined position within the data area. From that state, the pick-up is moved toward the inner circumferential side of disk. To locate the read light of the pick-up in the recording area within the read-in area, the pick-up on stand-by at home position is moved by the traverse seek to traverse a number of tracks, and then by track jump several times to jump one or more tracks. And the read light is located in the recording area where the data necessary for reproduction control is recorded.

In the DVD reproducer, when the pick-up is moved from the home position to the recording area where the data necessary for reproduction control is recorded, there is a risk that the data necessary for reproduction control can not be read correctly, if there is an area on the moving path that can not be read by the read light of the pick-up.

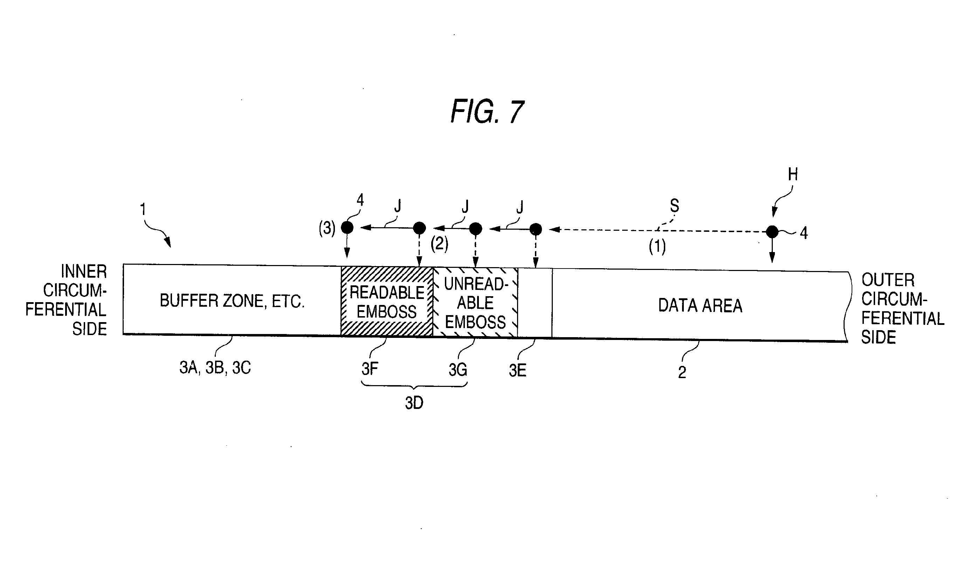

As shown in Fig. 7, if the DVD-RW1 is reproduced by the DVD reproducer, the pick-up on stand-by at home position H within the data area 2 firstly traverses a number of tracks (as indicated by (1) in the figure) by traverse seek S to be moved near the outer circumferential side of disk in the unreadable emboss zone 3G.

And the pick-up is moved by repeating track jump J several times (as indicated by (2)) to the readable emboss zone 3F where the control data necessary for reproduction control is recorded (as indicated by (3)).

Herein, since the unreadable emboss zone 3G is adjacent to the outer circumferential side of the readable emboss zone 3F, if the pick-up that is moved near the outer circumferential side of disk in the unreadable emboss zone 3G by traverse seek S is further moved to the inner circumferential side of disk by track jump J, so that the read light of the pick-up falls in an area of the unreadable emboss zone 3G.

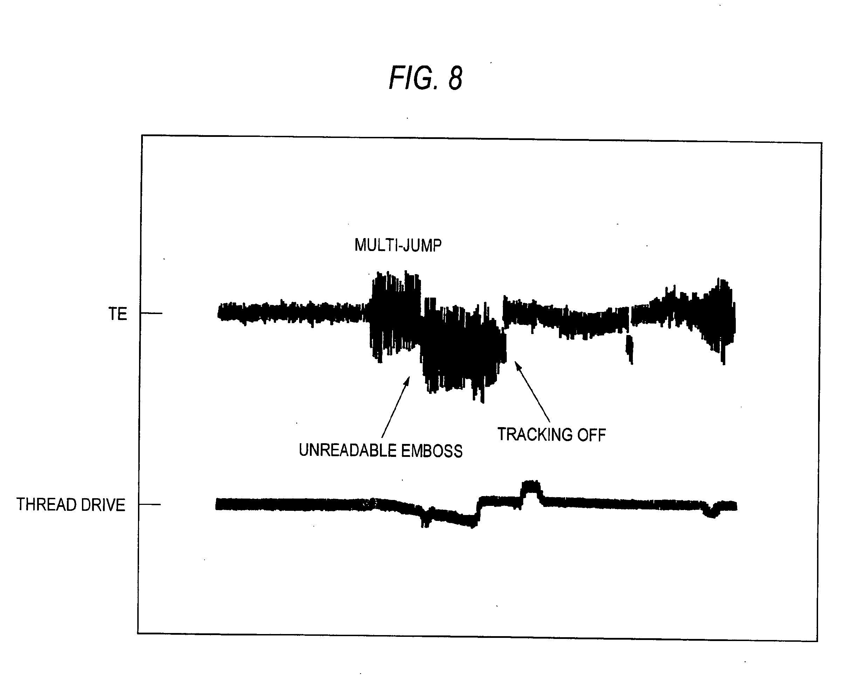

As shown in Fig. 8, if the read light of the pick-up falls in the area of the unreadable emboss zone 3G, the level of a tracking error signal TE is lowered as a whole, so that the tracking control for controlling the reading light to follow the track does not act normally, and the read light gets out of track. Therefore, the control data recorded in the readable emboss zone 3F can not be read correctly, resulting in a situation where the reproduction operation can not be performed excellently.

This invention is achieved in the light of the above-mentioned problems, and it is an object of the invention to provide a disk reproducer that can reproduce the data normally, even if the disk has a recording area assigned to the data recorded in a format unreadable by the pick-up.

The present invention provides a disk reproducer having a pick-up for optically reading the data recorded on a disk mounted at a predetermined reproduction position, and moving member for moving the pick-up in a radial direction of the disk, the reproducer comprising disk detecting member for detecting the type of disk mounted at the predetermined reproduction position, target position setting member for setting a moving target position to locate a read light of the pick-up in an area on the inner circumferential side of disk than a second recording area assigned to the data necessary for reproduction control and adjacent to the inner circumferential side of disk in a first recording area, if the disk detecting member detects the disk to have the first recording area assigned to the data recorded in a format unreadable by the pick-up, and control member for controlling the moving member to move the pick-up to the moving target position, and move the pick-up at the moving target position to locate the read light of the pick-up in the second recording area, characterized in that the control member controls the moving member to move the pick-up to the moving target position by traverse seek to traverse the first recording area.

In this invention, the moving target position is set to locate the read light of the pick-up in the area on the inner circumferential side of disk than the second recording area adjacent to the inner circumferential side of disk in the first recording area, and the pick-up is moved to the moving target position by traverse seek to traverse the first recording area, whereby the read light of the pick-up can be located in the second recording area reliably without getting out of the track. Hence, the data necessary for reproduction control that is recorded in the second recording area can be read to perform the reproduction operation excellently.

In this disk reproducer, a stand-by position is preset to locate the read light of the pick-up at a predetermined position within a data recording area on the outer circumrferential side of disk than the first recording area, and the target position setting member sets the moving target position as the stand-by position of the pick-up, if the disk detecting member detects the disk to have the first recording area.

In this way, the moving target position is set as the stand-by position, while the disk having the first recording area is mounted. Therefore, the read light of the pick-up can be located in the second recording area reliably without getting out of the track, and the start time for reproducing the data such as music data or image data recorded in the data recording area can be shortened.

In the Drawings:
Fig. 1 is a block diagram showing the schematic configuration of a disk reproducer according to one embodiment of the present invention.
Fig. 2 is a block diagram showing the essence of the disk reproducer according to the embodiment.
Fig. 3 is a flowchart for explaining the operation of the disk reproducer according to the embodiment.
Fig. 4 is a typical chart for explaining the operation of the disk reproducer according to the embodiment.
Fig. 5 is a typical chart for explaining the operation of the disk reproducer according to a variant embodiment of the invention.
Fig. 6 is a diagram showing the format of a disk having a first recording area of the invention.
Fig. 7 is a chart for explaining the operation of the conventional disk reproducer.
Fig. 8 is a waveform chart for explaining the tracking off in the conventional example.

The preferred embodiments of the present invention will be described below with reference to the accompanying drawings . In the following description, member and portions as already described are designated by the same numerals, and the description of those member and portions is omitted or simplified.

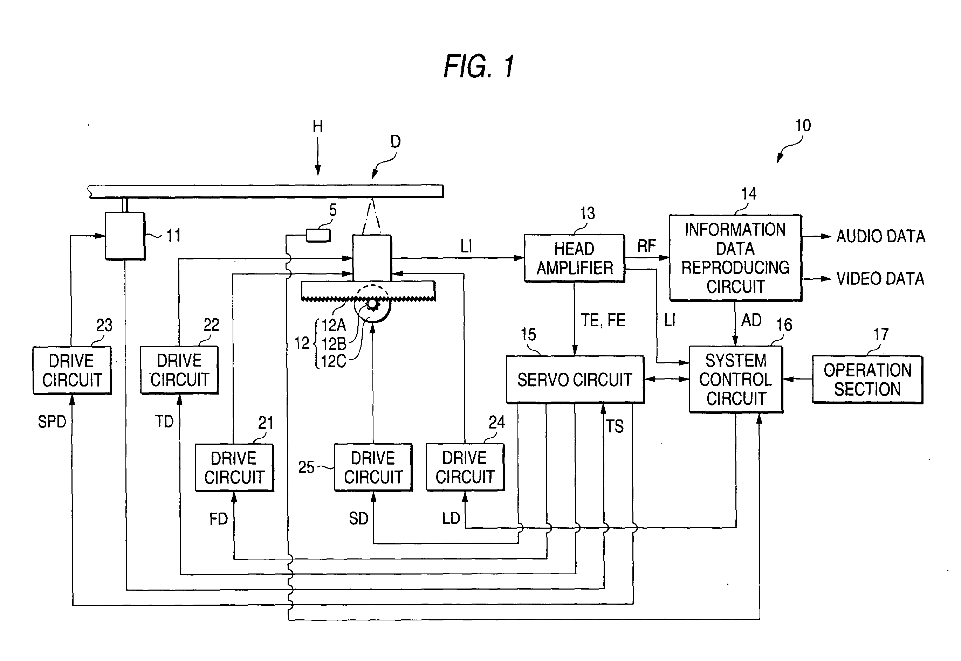

In Fig. 1, a schematic configuration of a disk reproducer 10 according to this embodiment of the invention is shown. This disk reproducer 10 is a DVD reproducer for reproducing the DVD (hereinafter referred to as a "disk D") such as DVD-VIDEO, DVD-ROM, DVD-R and DVD-RW, in which the disk D mounted on the predetermined reproduction position is rotated by a spindle motor and the data recorded on a signal plane of the disk D is read and reproduced by an optical pick-up 4.

Herein, the disk D is mounted on the predetermined reproduction position of the disk reproducer 10, with its center carried by a clamper and a turn table, not shown.

The pick-up 4 comprises an optical system having a laser diode that is a light source of laser beam, not shown, apolarizing beam splitter, and an objective lens, and a photo-detector for detecting a reflecting light from the disk D.

Herein, the objective lens is supported by a biaxial fine adjustment mechanism to be movable in a tracking direction and a focus direction.

The whole of the pick-up 4 is supported by a thread mechanism 12 as moving member to be movable in a radial direction of the disk D. The thread mechanism 12 has a rack 12A, a pinion 12B and a driving motor 12C, whereby the pick-up 4 is driven in the radial direction by activation of the motor 12C.

When the reading operation is stopped, the home position H where the pick-up 4 is on stand-by is set up to locate the read light at a certain position within a range of data area for the disk D. At the home position H, a proximity sensor 5 for sensing that the pick-up 4 arrives at the home position H is provided.

The photo-detector of the pick-up 4 outputs a light quantity signal LI that is an electrical signal in accordance with a reflected light quantity from the disk D. this light quantity signal LI is input into a head amplifier 13.

The head amplifier 13 comprises a current/voltage conversion circuit and a matrix operation/amplification circuit, not shown, to process the light quantity signal LI from the pick-up 4, thereby generating a signal by the matrix operation processing.

More specifically, the head amplifier 13 outputs an RF signal that is the reproduced data read from the disk D, a focus error signal FE for servo control, and a tracking error signal TE by the matrix operation processing for the light quantity signal LI.

The RF signal from the head amplifier 13 is output to an information data reproducing circuit 14, and the focus error signal FE and the tracking error signal TE are output to a servo circuit 15.

The information data reproducing circuit 15 performs the binarization and the demodulation to generate the audio data and the video data from the RF signal output from the head amplifier 13. If a digital audio amplifier and an audio speaker, as well as a digital video amplifier and a liquid crystal display are connected at the latter stage of the information data reproducing circuit 14, the voice and video can be reproduced.

Also, the information data reproducing circuit 14 has a function of retrieving the address of disk D from the RF signal, and sending the retrieved address to a system control circuit 16 for controlling the disk reproducer 10 as a whole. Thereby, the system control circuit 16 receives the address AD from the information data reproducing circuit 14 to recognize the position of the pick-up 4 in the radial direction of disk D.

The servo circuit 15 generates a focus drive signal FD and a tracking drive signal TD for controlling the focus and tracking of the pick-up 4 on the basis of the focus error signal FE and the tracking error signal TE.

The focus drive signal FD of the servo circuit 15 is sent to a drive circuit 21 for driving a focus coil, not shown, that moves an objective lens, not shown to or away from the surface of disk D. Thereby, a focus servo loop for moving the objective lens of the pick-up 4 to the position for focusing on the data of disk D is formed during the reading operation at any time.

The tracking drive signal TD of the servo circuit 15 is sent to a drive circuit 22 for driving a tracking coil, not shown, that moves the objective lens in the radial direction of disk D. Thereby, a tracking servo loop for enabling the objective lens of the pick-up 4 to trace the track of disk D is formed during the reading operation at any time.

Also, the servo circuit 15 has a function of receiving a rotating speed signal TS of the spindle motor 11, and sending a spindle drive signal SPD generated on the basis of the rotating speed signal TS to the drive circuit 23 for driving the spindle motor 11. Thereby, the spindle motor 11 is rotated at a required rotating speed at any time.

Moreover, the servo circuit 15 has a function of generating and outputting a thread drive signal SD with the trigger of low frequency components of the tracking error signal TE that is phase compensated by a tracking equalizer.

The servo circuit 15 has another function of receiving an acceleration signal and a deceleration signal from the system control circuit 16 and then generating the spindle drive signal SPD to control the start and stop of the spindle motor 11.

The acceleration signal and the deceleration signal output from the system control circuit 16 are generated by the system control circuit 16 on the basis of an operation command signal output from an operation section 17, connected to the system control circuit 16, which enables the user to make the manual operation.

Also, the servo circuit 15 has a function of outputting a laser drive signal LD for controlling the drive circuit 24 that drives a laser diode provided in the pick-up 4. The laser drive signal LD of the servo circuit 15 is generated by the servo circuit 15, on the basis of a command signal from the system control circuit 16, whereby the drive circuit 24 turns the laser diode on or off in accordance with the laser drive signal LD.

Moreover, the servo circuit 15 has a function of generating and outputting a thread drive signal SD on the basis of a thread error signal obtained from low frequency components of the tracking error signal TE and an access command signal from the system control circuit 16.

The thread drive signal SD of the servo circuit 15 is sent to the drive circuit 25 for driving the motor 12C provided in the thread mechanism 12.

The drive circuit 25 drives the rotation of the motor 12C in accordance with the thread drive signal SD and adjusts the rotating speed of the motor 12C. Thereby, the pick-up 4 can be moved to the correct position of disk D in the radial direction to read desired data of disk D.

Various kinds of servo operation as above are organically controlled by the servo circuit 15 and the system control circuit 16 that are constituted of a microcomputer.

For example, if the user starts the disk reproducer 10 by making an operation on the operation section 17, each of the servo circuit 15 and the system control circuit 16 sends an appropriate drive signal to the drive circuits 21 to 25 to place each section of the disk reproducer 10 in a state capable of starting the reproduction of disk D immediately, or a so-called stand-by state.

Various kinds of access operation, including a track jump J of the pick-up 4 and a traverse seek S, are realized by the servo circuit 15 under the control of the system control circuit 16.

For example, the traverse seek S is a search operation in which the system control circuit 16 calculates the number of tracks to be traversed from the current position up to the moving target position, and moves the pick-up 4 in accordance with the number of tracks.

In the traverse seek S, the movement is controlled by a thread drive signal SD from the servo circuit 15 that is not dependent upon the normal tracking servo . That is, the movement of the pick-up 4 is controlled by generating the thread drive signal required to make a long distance search upon trigger from the tracking equalizer, and making servo-control so that the objective lens of the pick-up 4 may not be shifted by its signal. Hence, the pick-up 4 can be moved a long distance to traverse as many as 250 tracks or more.

In the case where the long distance search is made by traverse seek S, it is difficult to locate the read light of the pick-up 4 at the moving target position, resulting in some error.

Track jump J is a search operation for enabling the pick-up 4 to traverse a preset number of tracks for the system control circuit 16 in moving the pick-up 4. Herein, track jump J for traversing 100 tracks, 32 tracks, 4 tracks or one track can be set up, for example.

In the track jump J, the search is performed by the normal tracking servo, the read light of the pick-up 4 can be located correctly at the moving target position.

And the control member 31, the disk detecting member 32 and the target position setting member 33 in this invention are composed of the software installed in the system control circuit 16.

Herein, in the case where the disk D is DVD-RW, the unreadable emboss zone 3G is a first recording area assigned to the data recorded in unreadable emboss that is a format of data unreadable by the pick-up 4, as previously described.

Also, the readable emboss zone 3F is a second recording area assigned to the data necessary for reproduction control that is adjacent to the inner circumferential side of the unreadable emboss zone 3G of the first recording area.

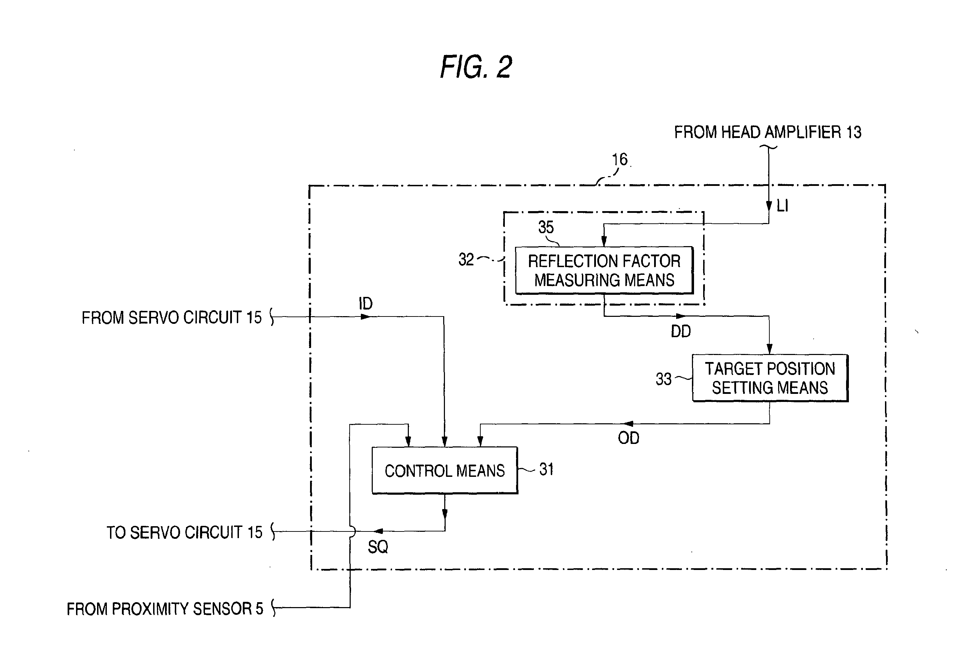

The system control circuit 16 comprises control member 31 for controlling the drive circuit 25 for the thread mechanism 12 via the servo circuit 15 to make various kinds of access operation, including the track jump J of the pick-up 4 and the traverse seek S and thus controlling the movement of the pick-up 4, disk detecting member 32 for detecting the type of disk D mounted, and target position setting member 33 for outputting a command signal OD to the control member 31 in moving the pick-up 4 at the start time of reproduction, when the mounted disk D is DVD-RW, as shown in Fig. 2.

Upon detecting DVD-RW having the unreadable emboss zone 3G of the first recording area, the disk detecting member 32 outputs a detection signal indicating the detection of DVD-RW to the target position setting member 33.

The disk detecting member 32 is provided with reflection factor measuring member 35 for measuring the reflection factor of the data area 2 of disk D.

The reflection factor measuring member 35 receives a light quantity signal LI that is an electrical signal according to the reflected light quantity detected by the photo-detector of the pick-up 4 from the head amplifier 13, and detects the type of disk D on the basis of this light quantity signal LI.

Since the DVD-RW has a different recording format from other DVDs, the reflection factor of the data area 2 is varied. That is, the DVD-VIDEO or DVD-ROM has the data recorded in bit format in the data area 2, whereas the DVD-RW has the data recorded in wobble format and PLL. Accordingly, the reflection factor of reflected light from the data recording plane is varied, because of their different data formats, whereby DVD-RW, that is, the disk having the recording area assigned to the data recorded in the format unreadable by the pick-up can be detected by wobble.

In addition, the type of disk D can be detected by reading the disk type information indicating the type of disk D recorded in the read-in area of disk D with the pick-up 4.

The reflection factor measuring member 35 can discriminate the DVD-RW from other DVDs, in which High is output if the disk D is DVD-RW, or Low is output if the disk D is other than DVD-RW.

Thereby, when the disk D is DVD-RW, a detection signal DD is output to the target position setting member 33.

The target position setting member 33 sets the moving target position, in firstly moving the pick-up 4 on stand-by at home position H circumferentially inwards in the radial direction of disk D.

That is, the target position setting member 33 sets the moving target position at the second position, if receiving the detection signal DD from the reflection factor measuring member 35. In other words, the address of the first position as the moving target position set by default is rewritten with the address of the second position, and the rewritten address of the second position is output to the control member 31 as a target position setting signal OD.

On the contrary, the target position setting member 33 sets the moving target position at the first position of default, and outputs the address of the first position as the target position setting signal OD to the control member 31, if not receiving the detection signal DD from the reflection factor measuring member 35.

Herein, in the case where the disk D is DVD-RW, the first position is a predetermined position at which the read light of the pick-up 4 is located within the readable emboss zone 3F, and the second position is a predetermined position at which the read light of the pick-up 4 is located within the buffer zone 3A on the inner circumferential side of disk D than the readable emboss zone 3F (first position).

The control member 31 receives a position data signal of the pick-up 4 from the servo circuit 15, and sends a sequence data signal SQ generated on the basis of the position data signal to the servo circuit 15 to control the drive circuit 25 indirectly via the servo circuit 15.

Namely, the control member 31 receives a target position setting signal OD from the target position setting member 33, after starting the disk reproducer 10, and then makes sure that the pick-up 4 is at home position H with a proximity sensor 5. And it locates the read light of the pick-up 4 at home position H in a predetermined area of disk D, detecting the position address of disk D at home position H, and outputting a sequence data signal SQ of moving the pick-up 4 from the home position H to the position indicated by the address of the target position setting signal OD by traverse seek S and track jump J.

Moreover, the control member 31 outputs a sequence data signal SQ of moving the second position to the first position at which the readable emboss zone 3F begins by track jump J, after the pick-up arrives at the second position.

A reproduction start operation of the disk reproducer 10 according to this embodiment of the invention will be described below.

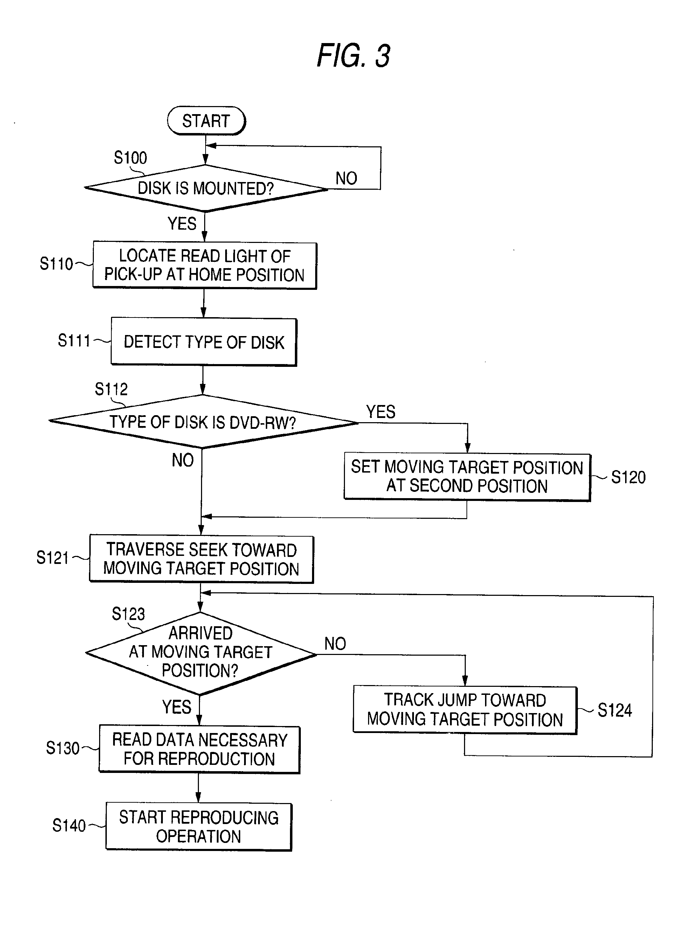

As shown in Fig. 3, at step S100, it is determined whether or not the disk D is mounted at a predetermined reproducing position of the disk reproducer 10, and if the disk D is not mounted, step S100 is repeated till the disk D is mounted.

On one hand, if the disk D is mounted, the operation goes to step S110, where the read light of the pick-up 4 is located at a predetermined position of disk D. Then, at step S111, the type of disk D is detected.

Then, at step S112, if the disk D is DVD-RW, the operation goes to step S120 and step S121. If the disk D is not DVD-RW, the operation goes to step S121.

Herein, if the operation goes by way of step S120, the moving target position is set at the second position in firstly moving the pick-up 4 inwards in the radial direction at the start time of reproduction.

On the other hand, if the operation gets to step S121 without way of step S120, the moving target position is set at the first position.

At step S121, the pick-up 4 is moved toward the set moving target position by traverse seek S.

Namely, the number of tracks to be traversed is counted from the address of home position and the address of the buffer zone 3A that is the address of the moving target position. Herein, since the counted number of tracks is the number of tracks to be moved a long distance of 250 tracks or more, for example, the movement of the pick-up 4 is made by traverse seek S.

And the absolute time is obtained from the reproduction start time for the leading address of the read-in area 3 and the reproduction start time of the home position address, the number of tracks corresponding to the absolute time is calculated, and an estimated number of tracks (e.g., 20) required to traverse the unreadable emboss zone 3G from the leading position of the data area 2 is added to the number of tracks. The information regarding the leading address is stored beforehand in a built-in memory (not shown) of the control member 31, and if the DVD-RW is detected by the reflection factor measuring member 35, its information is quoted.

Defining the address corresponding to the track position as a temporary target position, the traverse seek S is performed. Since this temporary target position enables the pick-up to surely traverse the unreadable emboss zone 3G, there is no risk that the read light of the pick-up 4 is located within the unreadable emboss zone 3G.

If the traverse seek S is completed, the operation goes to step S123. At step S123, if the pick-up 4 does not arrive at the moving target position as the first position at which the readable emboss zone 3F starts by traverse seek S, the operation goes to step S124, where the track jump J is repeated according to the remaining number of tracks to enable the pick-up 4 to arrive at the moving target position.

If the pick-up 4 arrives at the moving target position by traverse seek S and track jump J, the operation goes to step S130, where the data necessary for reproduction is read. Then, at step S140, the reproducing operation is started, and the operation for the reproduction start time is ended.

In this disk reproducer 10, the operation of the pick-up 4 at the start time of reproducing the DVD-RW will be described below.

Namely, as shown in Fig . 4, in starting to read the DVD-RW1, the pick-up 4 on stand-by at home position H is not moved, the read light of the pick-up 4 is located in the DVD-RW1, the address of DVD-RW1 when the pick-up is at home address H is acquired, and thereafter on the basis of this address, the search is started toward the second position W.

Then, the pick-up 4 traverses the unreadable emboss zone 3G by traverse seek S (as indicated by (1)), and makes the track jump J (as indicated by (2)) in an opposite direction to the reading direction by an appropriate number of times to be moved to the second position W (as indicated by (3)) as the moving target position.

Thereafter, the pick-up 4 makes the track jump J (as indicated by (4)) by an appropriate number of times in the reading direction to locate the read light within the readable emboss zone 3F to be moved to the predetermined position (first position) within the readable emboss zone 3F to read the control data. Then, the pick-up 4 gets to the data area 2 by traverse seek S or track jump J, and starts reading the data recorded in the data area 2.

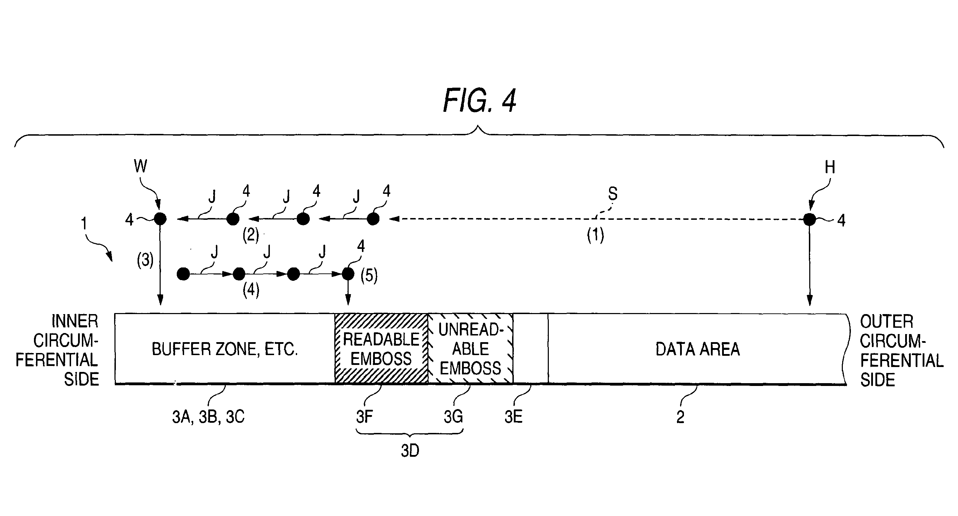

For the movement path of the pick-up 4 as shown in Fig. 4, the movement path (2) and the movement path (4) are represented separately for the convenience of explanation, but actually, they are the same path.

This embodiment provides the following advantages.

Namely, if the disk detecting member 32 detects that the mounted disk D is DVD-RW having the unreadable emboss zone 3G of the first recording area where the data is recorded in a format unreadable by the pick-up 4, the target position setting member 33 resets the moving target position, to which the pick-up 4 is firstly moved, from the first position in the readable emboss zone 3Fof the second recording area to the second position W set on the inner circumferential side of disk than the readable emboss zone 3F, when reproducing the disk D. Therefore, the pick-up 4 is moved by traverse seek S to traverse a number of tracks at once, but the read light of the pick-up 4 is not located within the unreadable emboss zone 3G, whereby the pick-up 4 is prevented from tracking off, the data necessary for reproduction is read surely, and the reproduction operation is performed reliably and excellently.

Since the home position H at which the pick-up 4 is on stand-by when the reading operation is stopped is set within the range of data area 2, and the read light of the pick-up 4 is located at a predetermined position of disk D, before the pick-up 4 is moved from the home position H to the second position W by traverse seek S . Therefore, the type of disk D can be detected by the pick-up 4, without need of providing a sensor for sensing the type of disk D separately, whereby the structure of the disk reproducer 10 can be simplified.

Additionally, since the home position H is set within the range of data area 2, and the read light of the pick-up 4 is located in the disk D when the pick-up 4 is at this home position H, there is no problem even if a partial disk such as CD-R having no read-in area 3 is mounted, whereby the selection range for disk D of reproduction object can be extended.

Moreover, the second position W is set within the range of buffer zone 3A, and the read light of the pick-up 4 is located at the middle position of the buffer zone 3A having relatively large breadth, although it is difficult to locate correctly the read light of the pick-up 4 at the second position W due to a tolerance in producing the DVD-RW1. Then, the tolerance in producing the DVD-RW1 is permitted by the buffer zone 3A, and from this respect, the pick-up 4 can be moved to the readable emboss zone 3F reliably, whereby it is assured that the normal operation of the disk reproducer can be started.

Since the pick-up 4 is moved from the second position W to the readable emboss zone 3F by track jump J, after the pick-up 4 arrives at the second position W, the pick-up 4 can arrive at the readable emboss zone 3F in a shorter time than when the pick-up 4 is moved by tracing the tracks. Thereby the control data of the readable emboss zone 3F can be read more rapidly, and from this respect, the normal operation of the disk reproducer 10 can be started rapidly.

This invention is not limited to the above embodiments, but various modifications may be made thereto as cited below.

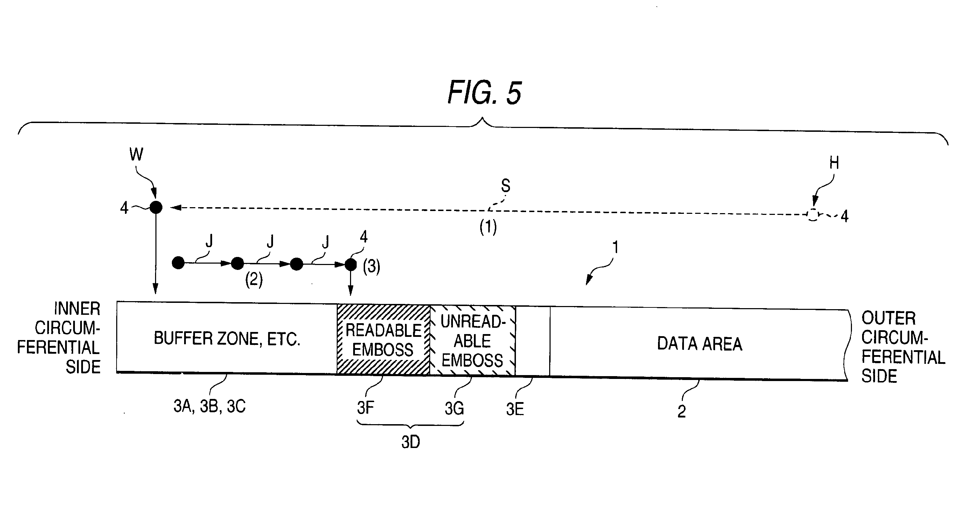

For example, in the disk reproducer, the pick-up may not be moved to the second position, after the read light of the pick-up is located at a predetermined position of disk, but if the DVD-RW1 is mounted, the pick-up 4 may be moved to the second position W by traverse seek S, and then to the readable emboss zone 3F, before the read light of the pick-up 4 is located at the predetermined position of DVD-RW1, as shown in Fig. 5.

In this case, in starting to read the DVD-RW1, the pick-up 4 on stand-by at home position H is moved to the second position W as the moving target position by crossing the unreadable emboss zone 3G by traverse seek S (as indicated by (1)), before the read light of the pick-up 4 is located at the predetermined position of DVD-RW1, as shown in Fig. 5.

Thereafter, the pick-up 4 is moved by track jump J (as indicated by (2)) an appropriate number of times to the reading direction to locate the read light within the readable emboss zone 3F. Thus, the pick-up 4 is moved to the predetermined position (first position) within the readable emboss zone 3F to read the control data (as indicated by (3)), and then arrives at the data area 2 by traverse seek S or track jump J, thereby starting to read the data recorded in the data area 2.

For the movement path of the pick-up 4 as shown in Fig. 5, a part of the movement path (1) by traverse seek S and the movement path (2) are represented separately for the convenience of explanation, but actually, they are the same path.

In this manner, the same effects as in the previous embodiment can be obtained, the pick-up 4 can read the control data in shorter time and start the normal operation rapidly, because the read light is not located in the DVD-RW1 when the pick-up 4 is at the home position H.

In setting the stand-by position of the pick-up 4,the stand-by position is set at the home position H, unless the disk D is DVD-RW, while the stand-by position is set at the second position W, if the disk D is DVD-RW, as shown in Fig. 5.

In this manner, while DVD-RW1 is mounted on the disk reproducer 10, the stand-by position is set at the second position W, whereby the pick-up 4 is not returned to the intrinsic home position H, resolving wasteful movement of the pick-up 4, and making it possible to increase the access speed of the disk reproducer.

In this case, if an optical element is provided apart from the pick-up 4, and a selector switch for selecting the type of disk by manual operation is provided to detect the type of disk, as soon as the start operation is performed, the pick-up 4 is moved to the second position W, making it possible to further increase the access speed of the disk reproducer.

The DVD-RW is not limited to a physical format as shown in Fig. 6, but may be in another format. In essence, it is necessary that the DVD-RW has a format in which a readable portion such as the readable emboss zone and an unreadable portion such as the unreadable emboss zone are adjacent to each other.

As described above, with this invention, the data necessary for reproduction control can be read correctly in the reproduction start operation, even if the disk has the recording area assigned to the data recorded in the format unreadable by the pick-up. Therefore, the data such as music data or image data recorded in the data recording area can be reproduced reliably.

### [Fig. 1]

- 13: Head amplifier
- 14: Information data reproducing circuit
- 15: Servo circuit
- 16: System control circuit
- 17: Operation section
- 21: Drive circuit
- 22: Drive circuit
- 23: Drive circuit
- 24: Drive circuit
- 25: Drive circuit
- A: Audio data
- B: Video data

### [Fig. 2]

- 31: Control means
- 33: Target position setting means
- 35: Reflection factor measuring means
- A: From servo circuit 15
- B: To servo circuit 15
- C: From proximity sensor 5
- D: From head amplifier 13

### [Fig. 3]

- S100: Is disk mounted?
- S110: Locate the read light of pick-up at home position.
- S111: Detect the type of disk.
- S112: Is the type of disk the DVD-RW?
- S120: Set the moving target position at second position.
- S121: Traverse seek toward the moving target position.
- S123: Arrived at the moving target position?
- S124: Track jump toward the moving target position.
- S130: Read the data necessary for reproduction.
- S140: Start the reproducing operation.

### [Fig. 4]

- 2: Data area
- 3A, 3B, 3C: Buffer zone
- 3F: Readable emboss
- 3G: Unreadable emboss
- A: Inner circumferential side
- B: Outer circumferential side

### [Fig. 5]

- 2: Data area
- 3A,3B, 3C: Buffer zone
- 3F: Readable emboss
- 3G: Unreadable emboss
- A: Inner circumferential side
- B: Outer circumferential side

### [Fig. 6]

- 2: Data area
- 3: Read-in area
- 3A: Buffer zone (all zero zone)
- 3B: Reference code zone (2 blocks)
- 3C: Buffer zone (all zero zone)
- 3D: Readable emboss zone (176 blocks)
- 3E: Buffer zone (all zero zone)
- A: Read direction

### [Fig. 7]

- 2: Data area
- 3A,3B, 3C: Buffer zone
- 3F: Readable emboss
- 3G: Unreadable emboss
- A: Inner circumferential side
- B: Outer circumferential side

### [Fig. 8]

- A: Multi-jump
- B: Unreadable emboss
- C: Tracking off
- D: Thread drive

## Claims

1. A disk reproducer having a pick-up for optically reading the data recorded on a disk mounted at a predetermined reproduction position, and moving member for moving said pick-up in a radial direction of said disk,
said reproducer comprising:
disk detecting member for detecting the type of disk mounted at said predetermined reproduction position;
target position setting member for setting a moving target position to locate a read light of said pick-up in an area on the inner circumferential side of disk than a second recording area assigned to the data necessary for reproduction control and adjacent to the inner circumferential side of disk in a first recording area, if said disk detecting member detects the disk to have said first recording area assigned to the data recorded in a format unreadable by said pick-up; and
control member for controlling said moving member to move said pick-up to said moving target position, and move said pick-up at said moving target position to locate the read light of said pick-up in said second recording area; wherein
said control member controls said moving member to move said pick-up to said moving target position by traverse seek to traverse said first recording area.

2. The disk reproducer according to claim 1, wherein
a stand-by position is preset to locate the read light of said pick-up at a predetermined position within a data recording area on the outer circumrferential side of disk than said first recording area, and
said target position setting member sets said moving target position as the stand-by position of said pick-up, if said disk detecting member detects the disk to have said first recording area.

3. A disk reproducer having a pick-up for optically reading the data recorded on a disk mounted at a predetermined reproduction position, and moving means for moving said pick-up in a radial direction of said disk,
said reproducer comprising:
disk detecting means for detecting the type of disk mounted at said predetermined reproduction position;
target position setting means for setting a moving target position to locate a read light of said pick-up in an area on the inner circumferential side of disk than a second recording area assigned to the data necessary for reproduction control and adjacent to the inner circumferential side of disk in a first recording area, if said disk detecting means detects the disk to have said first recording area assigned to the data recorded in a format unreadable by said pick-up; and
control means for controlling said moving means to move said pick-up to said moving target position, and move said pick-up at said moving target position to locate the read light of said pick-up in said second recording area; wherein
said control means controls said moving means to move said pick-up to said moving target position by traverse seek to traverse said first recording area.

4. The disk reproducer according to claim 3, wherein
a stand-by position is preset to locate the read light of said pick-up at a predetermined position within a data recording area on the outer circumrferential side of disk than said first recording area, and
said target position setting means sets said moving target position as the stand-by position of said pick-up, if said disk detecting means detects the disk to have said first recording area.
